# EUROPÄISCHE PATENTSCHRIFT

(11) **EP 2 184 158 B1**
(45) Veröffentlichungstag und Bekanntmachung des Hinweises auf die Patenterteilung: **12.01.2011**
(21) Anmeldenummer: 08168356.7
(22) Anmeldetag: 05.11.2008
(51) Int. Cl.: B29C 65/18, B65B 9/04, B65B 41/18

(54) **Vorrichtung zum Walzensiegeln von Folien**
Device for roll sealing films
Dispositif de scellement par cylindres de feuilles

(43) Veröffentlichungstag der Anmeldung: 12.05.2010
(73) Patentinhaber: Uhlmann Pac-Systeme GmbH & Co. KG, 88471 Laupheim (DE)
(72) Erfinder: Krahl, Wolfgang, 88471 Laupheim (DE); Knüppel, Jörg, 88477 Schwendi (DE)
(74) Vertreter: Wächter, Jochen

(56) Entgegenhaltungen:
- EP-A- 0 435 638
- DE-A1- 10 341 450
- US-A- 5 316 603

## Beschreibung

Die vorliegende Erfindung betrifft eine Vorrichtung zum Walzensiegeln von Folien, die insbesondere bei der Herstellung von Medikamentenverpackungen wie Blistern verwendet wird.

Eine bekannte Vorrichtung zum Walzensiegeln von Folien ist beispielsweise in der DE 100 52 218 A1 beschrieben. Derartige Vorrichtungen bestehen im Wesentlichen aus einer Siegelwalze und einer Gegenwalze, durch die eine ausgeformte Formfolie zusammen mit einer Deckfolie transportiert wird. Die Siegelwalze weist durch eine Heizung eine erhöhte Temperatur auf und wird mit einer bestimmten Siegelkraft auf die Gegenwalze gedrückt. Dadurch wird die Deckfolie auf die Formfolie gepresst und mit ihr verbunden. Die Medikamentenverpackung wird dadurch versiegelt. Die Kombination der Parameter Temperatur, Anpressdruck der Siegelwalze und Transportgeschwindigkeit der Gegenwalze bestimmt im Allgemeinen die Qualität der Siegelung.

Formfolie und Deckfolie werden in dem Bereich, wo die Siegelwalze auf die Gegenwalze drückt, miteinander verbunden. Da die Formfolie jedoch Blisterhöfe aufweist, die in entsprechende Ausnehmungen in der Gegenwalze eingreifen müssen, damit sich eine ebene Siegelfläche ergibt, ist die Kontaktfläche zwischen Formfolie und Deckfolie nicht immer gleich groß, d.h. die Kontaktlinie ist im Bereich der Ausnehmungen bzw. Blisterhöfe unterbrochen.

Bei mit einer konstanten Siegelkraft angepresster Siegelwalze wird aufgrund der sich stets verändernden Kontaktfläche eine unterschiedliche Flächenpressung zwischen Formfolie und Deckfolie erzeugt. Dies hat zur Folge, dass die Siegelwalze unterschiedlich tief in den Folienverbund einsinkt. Daraus resultiert eine ungleichmäßige Versiegelung der Folien, die auf der Medikamentenverpackung sichtbar ist.

Im Stand der Technik sind verschiedene Lösungsansätze bekannt, um durch eine Regelung der Siegelkraft der Siegelwalze die Flächenpressung je nach Position der Ausnehmungen bzw. Blisterhöfe anzugleichen und damit ein gleichmäßigeres Siegelbild zu erzeugen, so z.B. in der DE 10 2004 062 520 A1. Eine derartige Siegelkraftregelung ist jedoch sehr aufwändig und bei hohen Laufgeschwindigkeiten der Walzen kaum mehr handhabbar.

Aus der DE 10 2006 020 453 B3 ist ein Verfahren zur Herstellung von Siegelwerkzeugen unter Berücksichtigung einer Kenngröße für die Siegelqualität bekannt, wobei eine Kompensation der Toleranzen der Siegelwerkzeuge und der Folien durch eine definierte Eintauchtiefe von sich gegenüber stehenden Riffeln auf Siegelwalze und Gegenwalze erfolgt. Es wird dort eine Formel für die notwendige Riffelfläche A angegeben, wobei die Riffelung sich gleichmäßig und symmetrisch über Siegelwalze und Gegenwalze verteilt. Auch die Verwendung derartig geriffelter Siegelwerkzeuge führt zu ungleichmäßigen Siegelbildern, insbesondere bei konstanter Siegelkraft, denn die Flächenpressung variiert nach wie vor wie oben beschrieben.

Es ist daher die Aufgabe der vorliegenden Erfindung, eine verbesserte Vorrichtung zum Walzensiegeln von Folien bereitzustellen, die eine einfache Konstruktion aufweist und für ein gleichmäßiges Siegelbild sorgt.

Diese Aufgabe wird durch die Merkmale des Anspruchs 1 gelöst.

Die erfindungsgemäße Vorrichtung zum Walzensiegeln von Folien weist eine Gegenwalze und eine auf diese mit einer Siegelkraft drückende geheizte Siegelwalze auf, wobei eine Formfolie und eine Deckfolie zwischen der Siegelwalze und der Gegenwalze hindurchführbar und zu einem versiegelten Folienverbund versiegelbar sind, wobei die Oberfläche der Gegenwalze Ausnehmungen zur Aufnahme von Blisterhöfen der Formfolie sowie eine Riffelung aufweist. Die durch die Riffelung ausgebildeten Erhebungen weisen dabei unterschiedlich große Kontaktflächen auf.

Die Siegelkraft der Siegelwalze ist dabei vorzugsweise konstant. Damit kann auf komplizierte Siegelkraftregelungseinrichtungen verzichtet werden. Es ergibt sich dadurch eine gleichmäßige Flächenpressung über die gesamte Kontaktfläche zwischen Formfolie und Deckfolie, und damit ein gleichmäßiges und qualitativ hochwertiges Siegelbild.

Mit besonderem Vorteil ist die Riffelung als Linienriffelung ausgebildet. Unter Linienriffelung ist zu verstehen, dass die Erhebungen auf der Gegenwalze durch über die gesamte Breite der Gegenwalze ausgebildete linienförmige Einschnitte entstehen, die z.B. durch Fräsung in V- oder U-Form geformt sein können. Die Kontaktflächen der Erhebungen weisen dabei eine im Wesentlichen ebene Oberfläche auf. Die Linienriffelung hat den Vorteil, dass sie einfach herzustellen ist.

Alternativ kann die Riffelung der Gegenwalze als Rautenriffelung ausgebildet sein. Darunter ist im Sinne der vorliegenden Erfindung zu verstehen, dass die Kontaktflächen eine ebene, im Wesentlichen rechteck- oder rautenförmige Oberfläche aufweisen. Sie werden beispielsweise dadurch gebildet, dass senkrecht zueinander stehende Einschnitte in die Oberfläche der Gegenwalze gefräst oder gesägt werden.

Eine weitere Alternative der Riffelung besteht in einer Spitz- bzw. Pyramidenriffelung. Darunter ist zu verstehen, dass die Kontaktflächen der Gegenwalzen nicht eben und parallel zur Oberfläche der Gegenwalze sind, sondern als Spitzen bzw. Pyramiden mit entsprechenden Schrägflächen ausgebildet sind. Je nach Verteilungsdichte der Pyramiden ergibt sich eine unterschiedliche Eindringtiefe der Spitzen in den Folienverbund und damit die gewünschte unterschiedliche, angepasste Kontaktfläche, die für eine konstante Flächenpressung erforderlich ist.

Mit besonderem Vorteil sind die Kontaktflächen der Erhebungen in einem Mantelflächenlängsbereich der Gegenwalze am größten, in dem die Oberfläche der Gegenwalze durch die Ausnehmungen am stärksten reduziert ist, und entsprechend in einem Mantelflächenlängsbereich der Gegenwalze am kleinsten, in dem die Oberfläche der Gegenwalze durch die Ausnehmungen nicht unterbrochen ist. Demnach nimmt in dieser Konfiguration die Größe der Kontaktflächen der Erhebungen von dem maximal unterbrochenen Mantelflächenbereich der Gegenwalze zu dem nicht unterbrochenen Mantelflächenbereich der Gegenwalze hin ab. Durch eine derartige Riffelung wird bei einer üblichen gleichmäßigen Verteilung der Blisterhöfe auf der Oberfläche der Gegenwalze an jeder Position bei einem konstanten Druck durch die Siegelwalze eine Flächenpressung erzielt, die ebenfalls im Wesentlichen konstant ist, da die gesamte pro Mantelflächenlängsbereich zur Verfügung stehende "Nettokontaktfläche" der Gegenwalze über den gesamten Umfang der Gegenwalze konstant ist.

Ein besonders gleichmäßiges Siegelbild ergibt sich dann, wenn die Flächenpressung zwischen Formfolie und Deckfolie in jeder Position der Siegelwalze konstant ist. Schattierungen auf der Folie werden dadurch unterdrückt, partielle Durchstiche der Deckfolie sowie ungesiegelte Stellen werden vermieden.

Die Erfindung wird nachfolgend unter Bezugnahme auf die in den Zeichnungen dargestellten Ausführungsbeispiele näher beschrieben.
- Fig. 1: zeigt eine schematische Darstellung der wesentlichen Bestandteile einer bevorzug- ten Ausführungsform einer erfindungsgemäßen Vorrichtung zum Walzensiegeln von Folien in einer Seitenansicht.
- Fig. 2: zeigt eine Seitenansicht des Kontaktausschnitts der Ausführungsform aus Fig. 1.
- Fig. 3: zeigt eine schematische Draufsicht auf den Kontaktbereich der erfindungsgemäßen Vorrichtung in einer ersten Stellung des Folienverbundes auf der Gegenwalze.
- Fig. 4: zeigt eine schematische Draufsicht des Kontaktbereichs der erfindungsgemäßen Vorrichtung in einer zweiten Stellung des Folienverbundes auf der Gegenwalze
- Fig. 5: zeigt schematisch in Seitenansicht den Kontaktbereich der erfindungsgemäßen Vorrichtung in der in Fig. 3 dargestellten ersten Stellung der Gegenwalze.
- Fig. 6: zeigt schematisch eine Seitenansicht des Kontaktbereichs der erfindungsgemäßen Vorrichtung in der in Fig. 4 dargestellten zweiten Stellung der Gegenwalze.
- Fig. 7: zeigt eine perspektivische Ansicht einer Gegenwalze als Teil der bevorzugten Aus- führungsform der erfindungsgemäßen Vorrichtung.
- Fig. 8: zeigt einen Ausschnitt der Oberfläche der Gegenwalze aus Fig. 7.

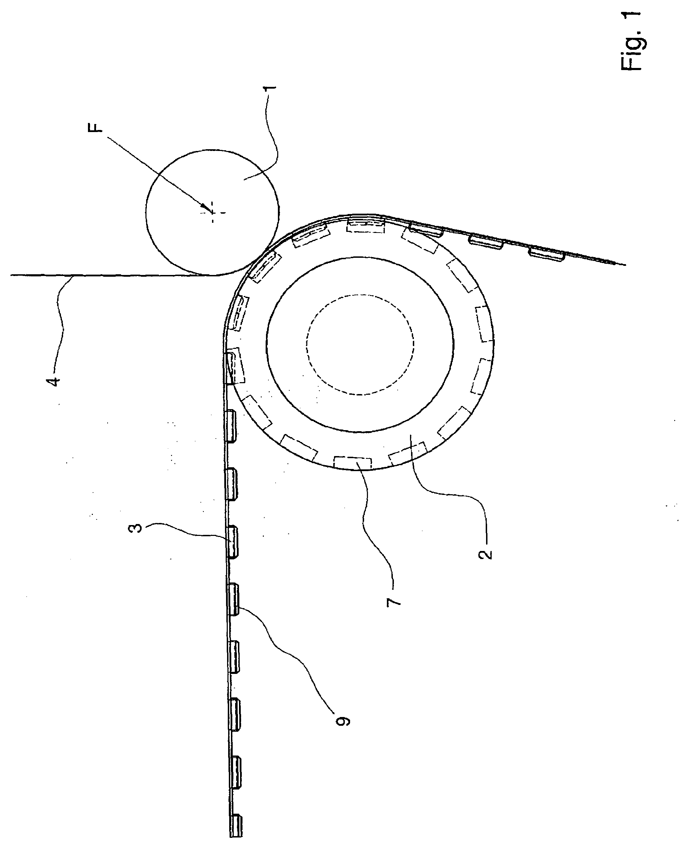

Fig. 1 ist eine schematische Seitenansicht einer bevorzugten Ausführungsform der erfindungsgemäßen Vorrichtung zum Walzensiegeln von Folien. Die Vorrichtung weist eine Siegelwalze 1 sowie eine Gegenwalze 2 auf, auch als Vorschubwalze bezeichnet. Zwischen Siegelwalze 1 und Gegenwalze 2 werden eine Formfolie 3, die darin ausgebildete, gefüllte Blisterhöfe 9 aufweist, sowie eine Deckfolie 4 hindurch geführt. Die Formfolie 3 und die Deckfolie 4 werden aus unterschiedlichen Richtungen an die Gegenwalze 2 bzw. die Siegelwalze 1 heran transportiert. Die Siegelwalze 1 weist durch Erwärmung mittels einer (nicht dargestellten) Heizeinrichtung eine höhere Temperatur als die Gegenwalze 2 auf und wird mit der Siegelkraft F auf die Gegenwalze gedrückt. Die Deckfolie 4 wird dadurch am Berührungspunkt der beiden Walzen auf die Formfolie 3 gepresst und mit ihr verbunden, was als Versiegelung bezeichnet wird. Der versiegelte Formfolienverbund wird nach Verlassen der Vorrichtung zum Walzensiegeln den nachfolgenden Einrichtungen der Verpackungskette zugeführt. Die Gegenwalze 2 weist umfänglich auf ihrer Oberfläche Ausnehmungen 7 auf, in die die Blisterhöfe 9 der Formfolie 3 während des Versiegelungsvorgangs eingreifen.

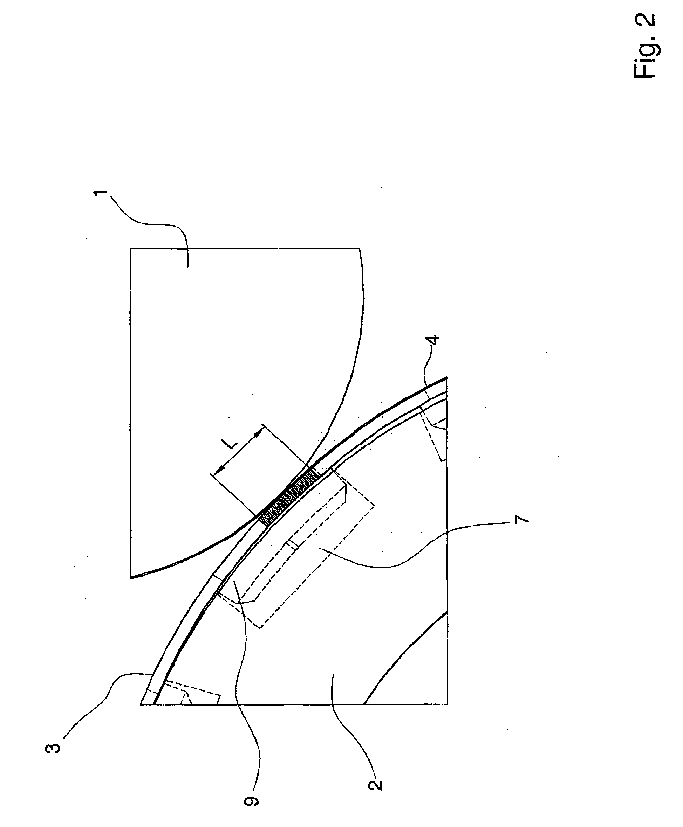

In Fig. 2 ist der Kontaktbereich, d.h. der Bereich, wo die Deckfolie 4 mit der Formfolie 4 durch Aufdrücken der erwärmten Siegelwalze 1 auf die Gegenwalze 2 aufgepresst und mit ihr verbunden wird, detaillierter dargestellt. Dabei ist die Strecke, wo die beiden Folien miteinander verbunden werden, als Kontaktzone mit der Länge L gekennzeichnet. Darüber hinaus erkennt man in Fig. 2, wie die in der Formfolie 3 ausgebildeten Blisterhöfe 9 exakt in die Ausnehmungen 7 der Gegenwalze 2 eingreifen.

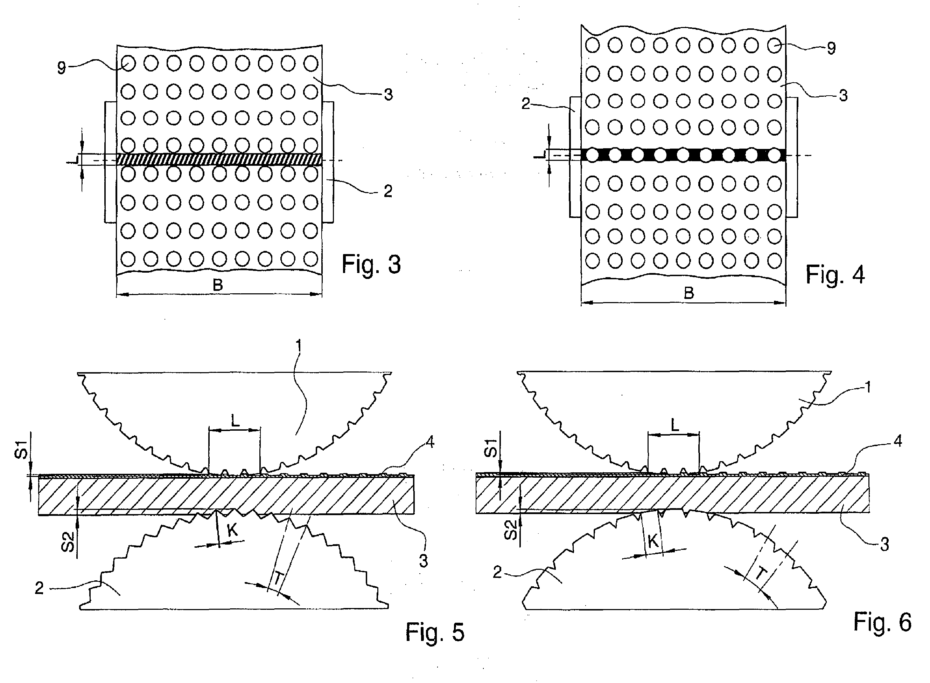

Fig. 3 ist eine Draufsicht auf die Kontaktzone L der erfindungsgemäßen Vorrichtung zum Walzensiegeln von Folien in einer ersten Stellung der Gegenwalze 2, wobei die Siegelwalze 1 aus Anschauungsgründen weggelassen ist. Die Formfolie 3 mit den darin ausgebildeten Blisterhöfen 9 bewegt sich auf der Gegenwalze 2 aufliegend in Transportrichtung. In der in Fig. 3 dargestellten ersten Stellung befindet sich die Kontaktzone L in einem Bereich der Formfolie 3, wo keine Blisterhöfe über die gesamte Breite der Formfolie ausgebildet sind, d.h. die Auflagefläche ist ununterbrochen. Dies bedeutet, dass die gesamte Siegelkraft F der Siegelwalze 1 auf den Bereich der Kontaktzone L wirkt, dessen Fläche in erster Näherung als L x B bestimmt werden kann, wobei B die Breite der Formfolie 3 ist. Die Flächenpressung, die für die Versiegelung der Deckfolie 4 auf der Formfolie 3 sorgt, hat deshalb in einer Ebene senkrecht zur Transport- bzw. Drehrichtung der Gegenwalze 2 denselben Wert.

Fig. 4 ist eine Draufsicht auf die Kontaktzone L der erfindungsgemäßen Vorrichtung zum Walzensiegeln in einer zweiten Stellung der Formfolie 3 auf der Gegenwalze 2. Dabei befinden sich die in einer Reihe angeordneten Blisterhöfe 9 der Formfolie 3 nahezu vollständig in der Kontaktzone L. Dadurch, dass die Kontaktzone L mehrfach von den Ausnehmungen 7 unterbrochen ist, verringert sich die Fläche erheblich, auf die die Siegelwalze 1 die Siegelkraft F aufbringen kann. Damit würde die Flächenpressung auf die zwischen den Blisterhöfen 9 liegenden Flächen der Kontaktzone L bei konstanter Siegelkraft F normalerweise stark ansteigen.

Fig. 5 zeigt schematisch die in Fig. 3 abgebildete Kontaktzone L in Seitenansicht in der erste Stellung, nämlich in Transportrichtung gesehen zwischen den Ausnehmungen 9 der Formfolie 3. Fig. 6 zeigt schematisch die in Fig. 4 abgebildete Kontaktzone L in Seitenansicht in der zweiten Stellung, wobei L über die Breite B der Formfolie 3 von den Ausnehmungen 9 der Formfolie 3 maximal unterbrochen ist. In Fig. 5 und Fig. 6 weist die Siegelwalze 1 jeweils eine eigene Riffelung auf, wobei die ebenen Oberflächen der Erhebungen der Riffelung auf die Deckfolie 4 drücken und in sie mit der Eindringtiefe S1 eindringen. Die Riffelung der Gegenwalze 2 ist in Fig. 5 und Fig. 6 unterschiedlich, wobei die Riffelung durch Parameter wie Breite K der durch die Riffelung entstehenden Erhebungen sowie die Teilung T als Abstand zwischen den Erhebungen bezeichnet ist. Es ist hinsichtlich der Fig. 5 und Fig. 6 anzumerken, dass die Darstellung der Gegenwalze 2 mit durchgehender Riffelung rein schematisch ist, denn erfindungsgemäß ist die Riffelung über die gesamte Oberfläche der Gegenwalze unterschiedlich groß und eben gerade nicht gleichmäßig über den Umfang der Gegenwalze 2.

In Fig. 5 ist die Riffelung der Gegenwalze 2 als eine Spitz- bzw. Pyramidenriffelung ausgebildet und erstreckt sich über die gesamte Breite B der Formfolie 3. Damit die durch die Siegelkraft F hervorgerufene Flächenpressung in der Kontaktzone L konstant bleibt, muss die Kontaktfläche der Erhebungen relativ klein sein. Der Parameter K geht deshalb gegen Null, da die Erhebungen keine ebene Oberfläche aufweisen. Die Erhebungen dringen bei konstanter Siegelkraft F um eine Strecke S2 in die Formfolie 3 ein.

Fig. 6 zeigt schematisch in Seitenansicht die Situation im Falle der Stellung der Kontaktzone L aus Fig. 4. Die Riffelung ist hier als Linienriffelung ausgebildet. Damit die konstante Siegelkraft F von der um die Fläche der Ausnehmungen 9 verkleinerte Kontaktzone L aufgenommen werden kann, ohne dass die Flächenpressung gegenüber der in den Fig.3 bzw. Fig.5 dargestellten Situation variiert, müssen die Erhebungen der Riffelung der Gegenwalze 2 eine größere Fläche aufweisen. Die Riffelung der Gegenwalze 2 weist eine definierte Breite K bei einer Teilung T auf, woraus sich eine erheblich größere Kontaktfläche der Erhebungen ergibt. Die Eindringtiefe S2 der Gegenwalze 2 in die Formfolie 3 ist aufgrund der größeren Fläche geringer. Die Flächenpressung ist jedoch über die gesamte Kontaktzone L hinweg konstant und weist denselben Wert auf, wie die Flächenpressung in der in Fig. 3 bzw. Fig. 5 dargestellten Stellung.

Durch die unterschiedlichen Riffelungen je nach Position der Ausnehmungen 7 auf der Gegenwalze 2 verändert sich die Summe der Eindringtiefe der Riffelstrukturen S1 + S2. Diese Anpassung an die geometrischen Verhältnisse der Oberfläche der Gegenwalze 2 führt zu einer konstanten Flächenpressung der Deckfolie 4 auf die Formfolie 3 und damit zu einer gleichmäßigen Versiegelung.

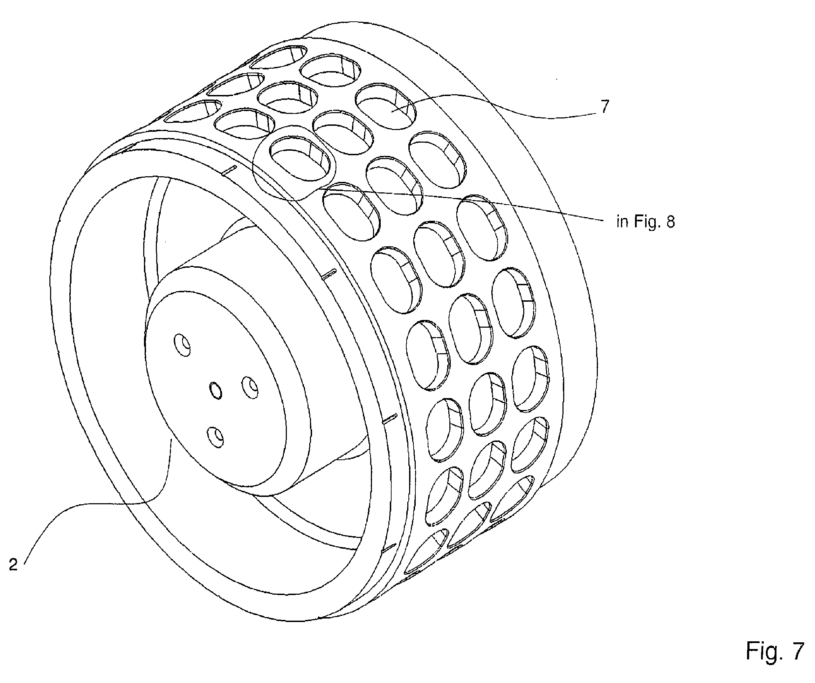

Fig. 7 zeigt in perspektivischer Ansicht schematisch eine Gegenwalze 2 mit darin ausgebildeten Ausnehmungen 7 zur Aufnahme der Blisterhöfe 9 der Formfolie 3 (in Fig. 7 nicht dargestellt).

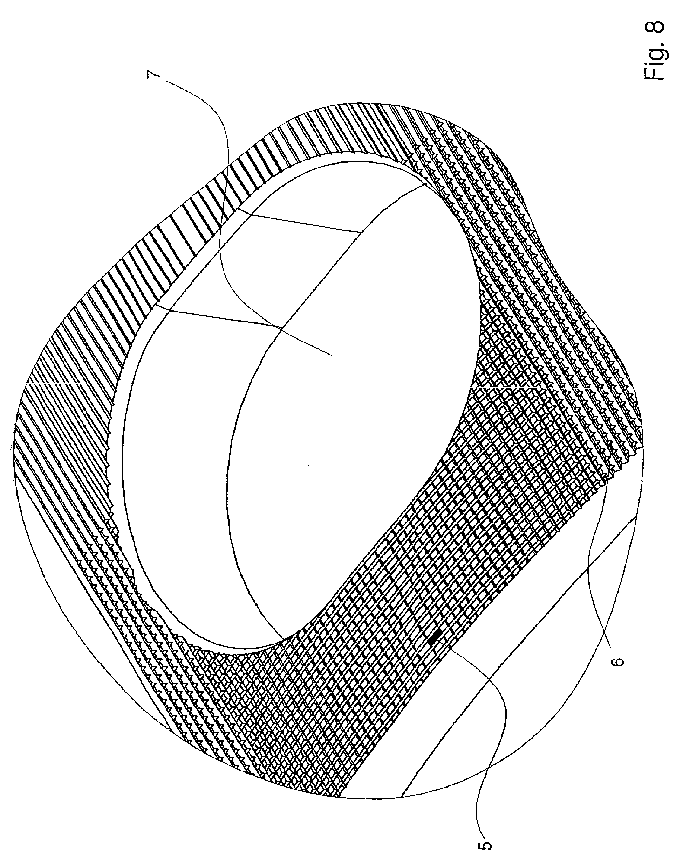

Fig. 8 zeigt eine perspektivische Ansicht eines aus Fig. 7 ausgeschnittenen Details der Oberfläche der Gegenwalze 2. Man erkennt deutlich die durch die unterschiedliche Riffelung der Oberfläche sichtbaren Erhebungen 5 bzw. 6 unterschiedlicher Größe. Die Größe der Kontaktflächen der Erhebungen ist in dem Mantelflächenlängsbereich maximal, wo die Breite der gesamten Gegenwalze 2 durch die Ausnehmungen 7 maximal unterbrochen ist. Exemplarisch für diesen Bereich steht die Kontaktfläche 5. Die Kontaktfläche 6 steht für den Mantelflächenlängsbereich, wo die Breite der Gegenwalze 2 durch die Ausnehmungen 7 nicht unterbrochen ist. In diesem Bereich ist die Größe der Kontaktflächen minimal. In dem Bereich zwischen den in Fig. 8 dargestellten Kontaktflächen 5 und 6 nimmt die Größe der Kontaktflächen mit abnehmender Unterbrechung der Breite durch die Ausnehmungen 7 hin ab. Die Oberflächenstruktur der Gegenwalze 2 wird demnach je nach Position der angeordneten Ausnehmungen 7 angepasst. Es entstehen somit Kontaktflächen mit hoher individuellen Flächenpressung, gekennzeichnet durch die Kontaktfläche 5, und Kontaktflächen mit niedriger Flächenpressung, exemplarisch dargestellt durch die Kontaktfläche 6, wobei für die Summe der gesamten Flächenpressung über die Breite der Gegenwalze gilt, dass diese konstant ist. Es ist anzumerken, dass die Verteilung der Ausnehmungen 7 auf der Gegenwalze 2 nicht notwendigerweise regelmäßig in Reihen und Spalten sein muss. Es sind andere, unregelmäßige Verteilungen möglich.

Ein weiterer Vorteil der vorliegenden Erfindung ist es, dass die Siegelkraft F durch entsprechende Dimensionierung der durch die Riffelung ausgebildeten Erhebungen unterschiedlicher Größe reduziert werden kann, was zu einer Vereinfachung und damit zu einer Kostenreduktion der gesamten Vorrichtung führt.

Mit dem erfindungsgemäßen Gegenstand wurde eine verbesserte Vorrichtung zum Walzensiegeln von Folien bereitgestellt, die eine einfache Konstruktion aufweist und eine qualitativ hochwertige Walzensiegelung ermöglicht.

## Patentansprüche

1. Vorrichtung zum Walzensiegeln von Folien mit einer Gegenwalze (2) und einer auf diese mit einer Siegelkraft (F) drückenden Siegelwalze (1), wobei eine Formfolie (3) und eine Deckfolie (4) zwischen der Siegelwalze (1) und der Gegenwalze (2) hindurchführbar und zu einem versiegelten Folienverbund versiegelbar sind, wobei die Oberfläche der Gegenwalze (2) Ausnehmungen (7) zur Aufnahme von Blisterhöfen der Formfolie (3) sowie eine Riffelung aufweist, wobei
die durch die Riffelung ausgebildeten Erhebungen (5, 6) unterschiedlich große Kontaktflächen aufweisen.

2. Vorrichtung nach Anspruch 1, **dadurch gekennzeichnet, dass** die Siegelkraft (F) der Siegelwalze (1) konstant ist.

3. Vorrichtung nach Anspruch 1 oder 2, **dadurch gekennzeichnet, dass** die Riffelung als Linienriffelung ausgebildet ist.

4. Vorrichtung nach Anspruch 1 oder 2, **dadurch gekennzeichnet, dass** die Riffelung als Spitz- bzw. Pyramidenriffelung ausgebildet ist.

5. Vorrichtung nach einem der vorhergehenden Ansprüche, **dadurch gekennzeichnet, dass** die Kontaktflächen der Erhebungen (5, 6) in einem Mantelflächenlängsbereich der Gegenwalze (2) am größten sind, in dem die Oberfläche der Gegenwalze (2) durch die Ausnehmungen (7) am stärksten reduziert ist.

6. Vorrichtung nach Anspruch 5, **dadurch gekennzeichnet, dass** die Kontaktflächen der Erhebungen (5, 6) in einem Mantelflächenlängsbereich der Gegenwalze (2) am kleinsten sind, in dem die Oberfläche der Gegenwalze (2) durch die Ausnehmungen (7) nicht unterbrochen ist.

7. Vorrichtung nach Anspruch 6, **dadurch gekennzeichnet, dass** die Größe der Kontaktflächen der Erhebungen (5, 6) jeweils von dem Mantelflächenlängsbereich der Gegenwalze (2), in dem die Oberfläche der Gegenwalze (2) durch die Ausnehmungen (7) am stärksten reduziert ist, hin zu dem Mantelflächenlängsbereich der Gegenwalze (2), in dem die Oberfläche der Gegenwalze (2) durch die Ausnehmungen (7) nicht unterbrochen ist, kontinuierlich abnimmt.

8. Vorrichtung nach einem der vorhergehenden Ansprüche, **dadurch gekennzeichnet, dass** die Flächenpressung zwischen Formfolie (3) und Deckfolie (4) konstant ist.

## Claims

1. Device for roll-sealing films, comprising a mating roller (2) and a sealing roller (1) which presses against the mating roller with a sealing force (F), it being possible to guide a moulded film (3) and a covering film (4) between the sealing roller (1) and the mating roller (2) and seal them together to form a sealed composite film structure, the surface of the mating roller (2) comprising recesses (7), to accommodate the blister pockets of the moulded film (3), and ribbing, wherein the elevations (5, 6) formed by the ribbing comprise contact surfaces of different sizes.

2. Device according to claim 1, **characterised in that** the sealing force (F) of the sealing roller (1) is constant.

3. Device according to either claim 1 or claim 2, **characterised in that** the ribbing is formed as linear ribbing.

4. Device according to either claim 1 or claim 2, **characterised in that** the ribbing is formed as peaked or pyramidal ribbing.

5. Device according to any one of the preceding claims, **characterised in that** the contact surfaces of the elevations (5, 6) are largest in a longitudinal region of the outer surface of the mating roller (2) in which the surface of the mating roller (2) is most reduced by the recesses (7).

6. Device according to claim 5, **characterised in that** the contact surfaces of the elevations (5, 6) are smallest in a longitudinal region of the outer surface of the mating roller (2) in which the surface of the mating roller (2) is not interrupted by the recesses (7).

7. Device according to claim 6, **characterised in that** the size of the contact surfaces of the elevations (5, 6) decreases continuously in each case from the longitudinal region of the outer surface of the mating roller (2) in which the surface of the mating roller (2) is most reduced by the recesses (7) towards the longitudinal region of the outer surface of the mating roller (2) in which the surface of the mating roller (2) is not interrupted by the recesses (7).

8. Device according to any one of the preceding claims, **characterised in that** the surface pressure between the moulded film (3) and the covering film (4) is constant.

## Revendications

1. Dispositif de scellement de feuilles par cylindres, comprenant un contre-cylindre (2) et un cylindre de scellement (1) pressant ce dernier avec une force de scellement (F), dispositif dans lequel une feuille moulée (3) et une feuille de couverture (4) peuvent être introduites entre le cylindre de scellement (1) et le contre-cylindre (2) et être scellées en un compound de feuilles scellé, la surface du contre-cylindre (2) présente des évidements (7) pour recevoir des alvéoles de blister de la feuille moulée (3) ainsi qu'une cannelure, les bosses (5, 6), réalisées par la cannelure, présentent des surfaces de contact différemment grandes.

2. Dispositif suivant la revendication 1, **caractérisé en ce que** la force de scellement (F) du cylindre de scellement (1) est constante.

3. Dispositif suivant l'une des revendications 1 et 2, **caractérisé en ce que** la cannelure est réalisée sous forme de cannelure linéaire.

4. Dispositif suivant l'une des revendications 1 et 2, **caractérisé en ce que** la cannelure est réalisée sous forme de cannelure en pointe ou de cannelure pyramidale.

5. Dispositif suivant l'une des revendications précédentes, **caractérisé en ce que** les surfaces de contact des bosses (5, 6) sont maximales dans une zone longitudinale de surface d'enveloppe du contre-cylindre (2), dans laquelle la surface du contre-cylindre (2) est réduite au maximum par les évidements (7).

6. Dispositif suivant la revendication 5, **caractérisé en ce que** les surfaces de contact des bosses (5, 6) sont minimales dans une zone longitudinale de surface d'enveloppe du contre-cylindre (2), dans laquelle la surface du contre-cylindre (2) n'est pas interrompue par les évidements (7).

7. Dispositif suivant la revendication 6, **caractérisé en ce que** la dimension des surfaces de contact des bosses (5, 6) décroît respectivement en continu de la zone longitudinale de surface d'enveloppe du contre-cylindre (2), dans laquelle la surface du contre-cylindre (2) est réduite au maximum par les évidements (7), en direction de la zone longitudinale de surface d'enveloppe du contre-cylindre (2), dans laquelle la surface du contre-cylindre (2) n'est pas interrompue par les évidements (7).

8. Dispositif suivant l'une des revendications précédentes, **caractérisé en ce que** la pression superficielle entre la feuille moulée (3) et la feuille de couverture (4) est constante.
